# EUROPÄISCHE PATENTSCHRIFT

(11) **EP 0 601 526 B1**
(45) Veröffentlichungstag und Bekanntmachung des Hinweises auf die Patenterteilung: **05.03.1997**
(21) Anmeldenummer: 93119648.9
(22) Anmeldetag: 06.12.1993
(51) Int. Cl.: F24J 2/46

(54) **Sonnenkollektor**
Solar collector
Collecteur solaire

(30) Priorität: 07.12.1992 DE 4241133
(43) Veröffentlichungstag der Anmeldung: 15.06.1994
(73) Patentinhaber: Müller, Friedrich, D-74589 Satteldorf (DE)
(72) Erfinder: Müller, Friedrich, D-74589 Satteldorf (DE)
(74) Vertreter: von Hellfeld, Axel, Dr. Dipl.-Phys.

(56) Entgegenhaltungen:
- DE-U- 9 211 757
- FR-A- 2 286 357

## Beschreibung

Die vorliegende Erfindung betrifft einen Sonnenkollektor mit einem Kollektorgehäuse, das wenigstens einen das Innere des Kollektorgehäuses mit der Umgebung verbindenden Belüftungsdurchlaß aufweist.

Derartige Sonnenkollektoren, insbesondere ihr Innenraum, sind naturgemäß hohen Temperaturschwankungen ausgesetzt, die von etwa -20°C bis +200°C reichen können. Diese Temperaturunterschiede bewirken, daß sich die im Inneren des Kollektorgehäuses befindliche Luft zusammenzieht oder ausdehnt. Damit im Kollektorgehäuse kein Über- oder Unterdruck entsteht, sind Belüftungsdurchlässe in dem Kollektorgehäuse vorgesehen, die einen Luftaustausch zwischen dem Inneren des Kollektorgehäuses und der Umgebung zulassen. Bei hohen Temperaturen entweicht Luft aus dem Inneren des Kollektorgehäuses in die Umgebung, bei niedrigen Temperaturen strömt Luft von der Umgebung in das Innere des Kollektorgehäuses. Auf diese Weise wird ein Über- oder Unterdruck, der eine Zerstörung des Gehäuses zur Folge haben könnte, zuverlässig vermieden.

Da der Luftaustausch zwischen der Umgebung und dem Inneren des Kollektorgehäuses ständig stattfindet, strömen im Laufe eines Jahres bei üblichen Sonnenkollektoreinheiten etwa 4 bis 5 m³ von der Umgebung in das Innere des Kollektorgehäuses bzw. von dem Inneren des Kollektorgehäuses in die Umgebung. Bei einer durchschnittlichen Lebensdauer eines Sonnenkollektors von etwa 30 Jahren bedeutet dies, daß etwa 120 m³ ausgetauscht werden.

Aufgrund der Verschmutzung der Luft, wie sie insbesondere in Ballungs- oder Industriegebieten gegeben ist, aber auch wenn z.B. Sandstaub durch Südwind herangetragen wird, wird das Innere des Kollektors und dort insbesondere die Oberfläche der hochempfindlichen, selektivbeschichteten Solarabsorber verschmutzt. Dies führt im Laufe der Zeit zu einer Verringerung des Wirkungsgrades der Solaranlage.

Um dies zu verhindern, bestünde die Möglichkeit, herkömmliche Filze oder metallische Luftfilter in den Belüftungsdurchlässen vorzusehen. Da jedoch die Sonnenkollektoren meistens auf einem Hausdach angeordnet sind und durch Eindeckrahmen in das Ziegeldach integriert sind, sind die Sonnenkollektoren in der Regel nur sehr schwer zugänglich, so daß ein regelmäßiges Wechseln der Filter kaum möglich und im übrigen auch sehr unpraktisch ist. Um dennoch ein Zusetzen der Filter zu verhindern, wäre es erforderlich, eine sehr große Anzahl von Belüftungsdurchlässen mit entsprechenden Filtern vorzusehen, um während der gesamten Lebensdauer des Sonnenkollektors einen Luftaustausch sicher zu gewährleisten. Dies ist jedoch sehr teuer, verringert die Stabilität des Kollektorgehäuses und beinhaltet die Gefahr, daß durch die große Anzahl von Belüftungsdurchlässen Feuchtigkeit in das Innere des Kollektorgehäuses eindringt. Auch bedingt eine große Anzahl von Belüftungsdurchlässen einen Wärmeverlust aus dem Kollektorgehäuse.

Aus G 92 11 757 U1 ist eine Staubsperre für Sonnenkollektoren bekannt, bei der die Filteranlage den Abstand zwischen dem Gehäuse und dem Rahmenteil vollständig ausfüllt. Dies hat zur Folge, daß im Bereich des Lufteintritts eindringende Luft sich zwar an einer größeren äußeren Oberfläche der Filteranlage nähern kann, aber dann keilförmig auf die äußere Öffnung der Druckausgleichsbohrungen durch die Filteranlage hindurchströmen wird. In dem Bereich direkt vor der äußeren Öffnung der Druckausgleichsbohrung hat die Filteranlage genau den gleichen Luftdurchlaßquerschnitt wie die Druckausgleichsbohrung. In diesem "Nadelöhr" wird sich im Laufe der Zeit Staub ansammeln, der einen wirksamen Luftaustausch zwischen der Umgebung und dem Inneren des Sonnenkollektors behindert und im Extremfall sogar verhindert. Der Umstand, daß die Filteranlage eine Filterstrecke aufweist, die länger ist als die Filterdicke, hat in diesem Zusammenhang keine Wirkung, da jegliche Luft, die durch die Druckausgleichsbohrung hindurchtritt, direkt im Bereich vor der äußeren Öffnung der Druckausgleichsbohrung durch die Filteranlage passieren muß.

Die Anordnung aus G 91 14 555.4 U1 kann für dieses Problem auch keine Anregung zur Abhilfe liefern, da dort im Lüftungskanal ein kleiner Filter vorgesehen ist, der lediglich den Durchlaßquerschnitt des Lüftungskanals aufweist.

Der vorliegenden Erfindung liegt demnach das Problem zugrunde, bei Sonnenkollektoren der eingangs genannten Art die vorstehend erläuterten Schwierigkeiten zu überwinden und einen Sonnenkollektor bereitzustellen, bei dem das Innere des Kollektorgehäuses wirksam vor eindringendem Staub geschützt ist und dennoch für die gesamte Lebensdauer des Sonnenkollektors ein wirksamer Luftaustausch ohne die Notwendigkeit eins Austauschs von Filtern gewährleistet ist.

Dazu ist bei dem Sonnenkollektor erfindungsgemäß wenigstens ein Staubfilter vorgesehen, das im Abstand von dem Belüftungsdurchlaß unter Bildung eines Freiraumes angeordnet ist, das einen größeren Luftdurchlaßquerschnitt als der Belüftungsdurchlaß aufweist, und das so mit dem Kollektorgehäuse verbindbar ist, daß in das Kollektorgehäuse eintretende Luft das Staubfilter passiert.

Auf diese Weise kann Luft aus der Umgebung durch das Staubfilter gelangen, sich im Zwischenraum zwischen dem Staubfilter und dem Belüftungsdurchlaß verteilen und dann durch den Belüftungsdurchlaß in das Innere des Kollektorgehäuses gelangen. Da das Staubfilter größere Abmessungen, und damit eine größere Oberfläche als der Querschnitt des Belüftungsdurchlasses aufweist, ist sichergestellt, daß auch im Laufe der Jahre genügend freie Filteroberfläche verbleibt, wenn der Filter sich nach und nach zusetzt, um einen Luftaustausch zwischen der Umgebung und dem Innern des Kollektorgehäuses zu ermöglichen. Da das Staubfilter so mit dem Kollektorgehäuse verbindbar ist, daß in das Kollektorgehäuse eintretende Luft das Staubfilter passiert, kann die Luft nur durch das Staubfilter in das Innere des Kollektorgehäuses gelangen. Mithin ist ein Verstauben der Solarabsorber aufgrund von das Staubfilter nicht passierender "Nebenluft" wirksam verhindert.

Je nach Größe des Kollektorgehäuses können auch mehrere Belüftungsdurchlässe vorgesehen sein.

Bevorzugt ist der Luftdurchlaßquerschnitt des Staubfilters (oder mehrerer Staubfilter) um ein Mehrfaches größer als der Querschnitt des Belüftungsdurchlasses (oder der Belüftungsdurchlässe). Das Verhältnis des Luftdurchlaßquerschnitts des Staubfilters (oder der Staubfilter) zum Querschnitt des Belüftungsdurchlasses (oder der Belüftungsdurchlässe) kann größer als 5 sein, bevorzugt 10.

In Abhängigkeit von den baulichen Vorgaben kann das Staubfilter wahlweise an der Außenseite des Kollektorgehäuses oder an der Innenseite des Kollektorgehäuses angeordnet sein.

Um eine möglichst einfache und kostengünstige Montage des Staubfilters an dem Kollektorgehäuse sicherzustellen, ist es vorteilhaft, wenn die Abmessungen des Staubfilters so gewählt sind, daß das Staubfilter wenigstens zwei Belüftungsdurchlässe abdeckt, vorzugsweise alle Belüftungsdurchlässe.

Bei einer bevorzugten Ausführungsform des Erfindungsgegenstandes ist im Innern des Kollektorgehäuses eine wärmeisolierende Schicht angeordnet, und das Staubfilter ist zwischen der Innenseite des Kollektorgehäuses und der wärmeisolierenden Schicht angeordnet. Dabei kann die Anordnung entweder derart getroffen sein, daß an dem Kollektorgehäuse ein Ansatz zur Aufnahme des Staubfilters vorgesehen ist, oder daß die wärmeisolierende Schicht einen Ansatz zur Aufnahme des Staubfilters aufweist.

Vorzugsweise weist der Ansatz durch zwei von dem Kollektorgehäuse und zueinander im Abstand gehalterte einander gegenüberstehende Nuten auf, in die das Staubfilter einbringbar ist. Dabei kann das Staubfilter entweder als länglicher Streifen ausgebildet sein, der seitlich in die Nuten eingeschoben wird. Oder das Staubfilter weist eine kreisrunde Gestalt auf, wobei dann das Staubfilter von außen in eine umlaufende Ringnut eingedrückt werden kann.

Um eine sichere Halterung des Staubfilters in dem Ansatz sicherzustellen, ist der Abstand der jeweiligen Flanken der Nuten ausreichend groß gewählt, um zusätzlich zu dem Staubfilter wenigstens einen Abdichtkörper in die Nuten einbringen zu können. Vorzugsweise weisen dabei wenigstens eine der jeweiligen Flanken und der daran anliegende Abdichtkörper einander entsprechende Hinterschneidungen auf, die ein Herausrutschen des Abdichtkörpers aus der Nut verhindern. Um dem Staubfilter eine ausreichende Steifigkeit zu verleihen, ist es vorteilhaft, wenn dieser einen Rahmen aufweist.

Weitere Vorteile und Eigenschaften des Erfindungsgegenstandes ergeben sich aus der nachfolgenden Figurenbeschreibung, in der Ausführungsbeispiele des Erfindungsgegenstandes unter Bezugnahme auf die Zeichnung näher erläutert sind. Es zeigen:
Fig. 1 eine perspektivische Darstellung des Kollektorgehäuses eines Sonnenkollektors in einer Teilansicht einer ersten Ausführungsform der Erfindung,
Fig. 2 eine perspektivische Darstellung des Kollektorgehäuses eines Sonnenkollektors in einer Teilansicht einer zweiten Ausführungsform,
Fig. 3 eine perspektivische Darstellung des Kollektorgehäuses eines Sonnenkollektors in einer Teilansicht einer dritten Ausführungsform,
Fig. 4 eine perspektivische Darstellung des Kollektorgehäuses eines Sonnenkollektors in einer Teilansicht einer vierten Ausführungsform,
Fig. 5 eine perspektivische Darstellung eines Teils des Ansatzes zur Aufnahme des Staubfilters in einer Teilansicht,
Fig. 6 eine Vorderansicht des Kollektorgehäuses eines Sonnenkollektors gemäß Fig. 4,
Fig. 7 eine perspektivische Darstellung des Kollektorgehäuses eines Sonnenkollektors in einer Teilansicht in einer fünften Ausführungsform, und
Fig. 8 eine schematische Ansicht des Kollektorgehäuses eines Sonnenkollektors von unten in einer Teilansicht einer weiteren Ausführungsform.

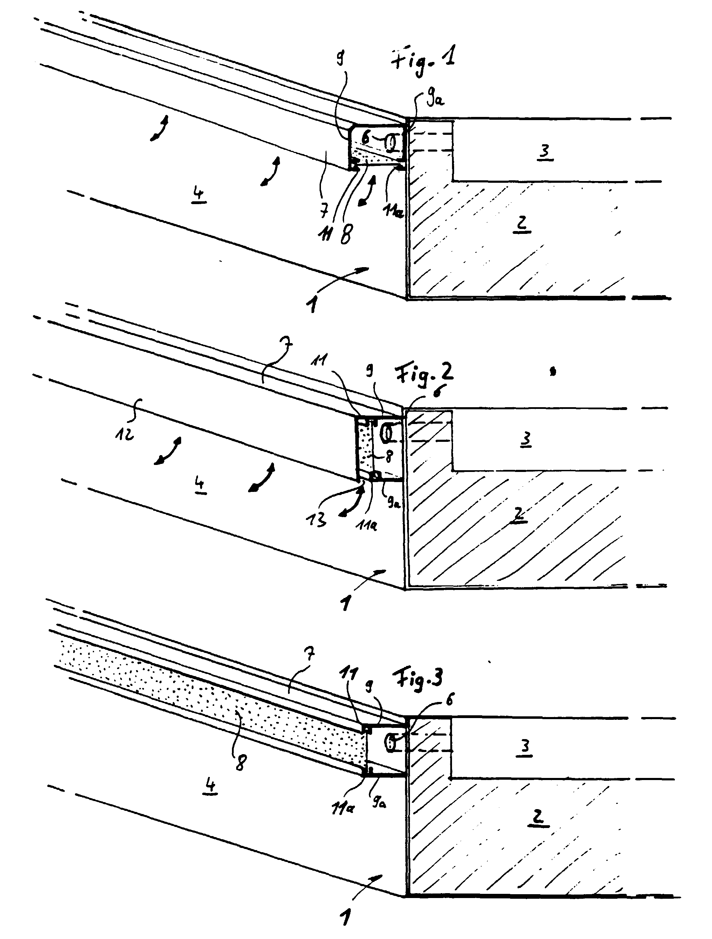

In Fig. 1 ist ein Sonnenkollektor mit einem Kollektorgehäuse 1 veranschaulicht, das einen im wesentlichen quaderförmigen Aufbau hat. Der Boden und die Seitenwände des Kollektorgehäuses 1 sind innen mit einer wärmeisolierenden Schicht 2 ausgekleidet. Die - nicht weiter veranschaulichten - Solarabsorber sind in dem verbleibenden Innenraum 3 des Kollektorgehäuses untergebracht.

An einer Stirnwand 4 des Kollektorgehäuses 1 sind mehrere Belüftungsdurchlässe 6 in Form von Durchgangslöchern in den Innenraum 3 des Kollektorgehäuses vorgesehen. Diese Belüftungsdurchlässe 6 sind durch einen an der Außenseite der Stirnwand 4 befestigten Ansatz 7 in Gestalt eines Hohlprofils überdeckt, das ein Staubfilter 8 trägt.

Der Ansatz 7 besteht aus einem im Querschnitt etwa U-förmigen Strangpreß-Hohlprofil, das an der Gehäusewand 4 derart angebracht ist, daß die offene Seite des Hohlprofils nach unten weist. An den beiden Seitenwänden 9, 9a des Ansatzes 7 sind an den freien Enden jeweils querverlaufende einander gegenüberstehende Nuten 11, 11a ausgeformt, zwischen die das Staubfilter 8 so eingebracht ist, daß es die offene Seitenfläche des Hohlprofils verschließt. Dadurch ist der freie Innenraum in dem Hohlprofil abgedichtet und das Staubfilter 8 ist durch den freien Innenraum des Hohlprofils von den Belüftungsdurchlässen 6 im Abstand gehalten. Der Belüftungsdurchlaß 6 in der Gehäusewand des Kollektorgehäuses 1 setzt sich durch eine entsprechende durchgehende Bohrung in der wärmeisolierenden Schicht 2 in den inneren freien Raum 3 in dem Sonnenkollektor fort.

Gegenüber der Ausführungsform gemäß Fig. 1, in der das Staubfilter 8 im rechten Winkel zu der Gehäusewand 4 des Kollektorgehäuses 1 angeordnet ist und das Innere des Ansatzes 7 den Freiraum bildet, in dem sich die gefilterte Luft verteilen kann, um durch die Belüftungsdurchlässe 6 zu strömen, ist bei der Fig. 2 der Ansatz 7 insoweit anders ausgestaltet, als hierbei das Staubfilter 8 parallel zur Gehäusewand 4 im Abstand dazu gehaltert ist. Die Seitenwände 9, 9a des Ansatzes 7 sind unterschiedlich breit, und an der oberen, breiteren Seitenwand 9 des Ansatzes 7 ist eine der Breite des Staubfilters 8 entsprechende Verblendung 12 angeformt, so daß sich zwischen der freien Längskante der Blende 12 und der Seitenwand 9a des Ansatzes 7 ein Luftspalt 13 ergibt, durch den Luft aus- und einströmen kann.

Gegenüber der Ausführungsform gemäß Fig. 2 ist der Ansatz 7 bei der Ausführungsform nach Fig. 3 dahingehend abgewandelt, daß die Verblendung 12 weggelassen ist, so daß das Staubfilter 8 zur Umgebung hin freiliegt.

Im übrigen entspricht die Ausführungsform nach Fig. 3 der Ausführungsform gemäß Fig. 2.

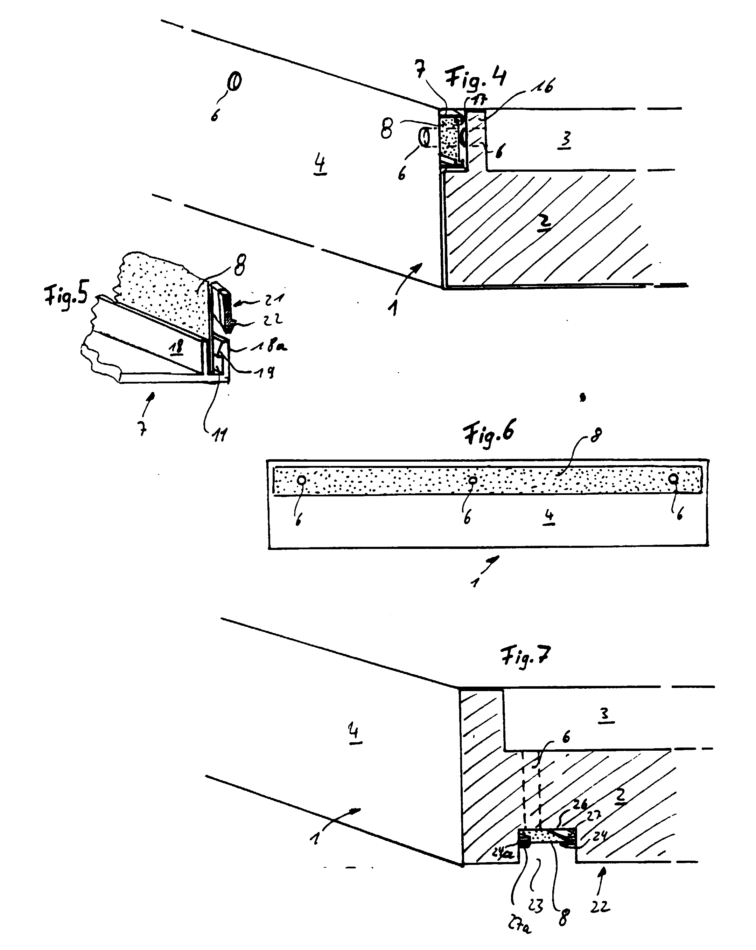

Der Sonnenkollektor gemäß Fig. 4 weicht von den Ausführungsformen gemäß Fig. 1 bis Fig. 3 dadurch ab, daß der Ansatz 7 auf der Innenseite der Gehäusewand 4 angeordnet ist. Dazu weist die wärmeisolierende Schicht 2 eine Aussparung auf, in die der Ansatz 7 hineinragt. Dabei ist die Anordnung so getroffen, daß auch zwischen dem Staubfilter 8 und dem Seitenteil 16 der wärmeisolierenden Schicht 2 ein Zwischenraum 17 verbleibt, in dem sich die Luft verteilen kann. Im übrigen setzt sich jedoch der Belüftungsdurchlaß 6 in dem Seitenteil 16 der wärmeisolierenden Schicht 2 bis in den freien Innenraum 3 im Innern des Sonnenkollektors fort.

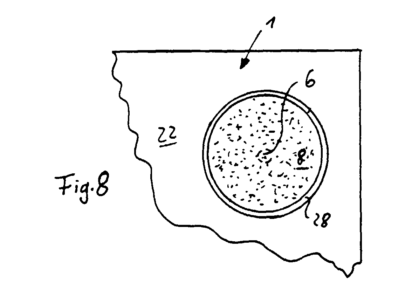

In Fig. 5 ist ein Abschnitt des Ansatzes 7 veranschaulicht, bei dem die Befestigung des Staubfilters 8 in der Nut 11 veranschaulicht ist. Die Nut 11 ist ein im wesentlichen U-förmig gestaltetes Profil, bei dem zwei Flanken 18, 18a im wesentlichen parallel zueinander verlaufen und zwischen sich die Nut 11 begrenzen. Die Flanke 18a weist eine nach innen gerichtete keilförmige Verbreiterung 19 auf, deren Dicke in Richtung des Nutbodens zunimmt. Die Verbreiterung erstreckt sich etwa über die halbe Höhe der Flanke 18a und ist so bemessen, daß zwischen der breitesten Stelle der Verbreiterung 19 und der gegenüberliegenden Flanke 18 ausreichend Raum verbleibt, um das Staubfilter 8 sowie einen Abdichtkörper 21 aufzunehmen. Der Abdichtkörper 21 ist im wesentlichen ein rechteckiger Kunststoffstreifen, der an seiner einen Längskante, die der Flanke 18a zugewandt ist, ebenfalls eine keilförmige Verbreiterung 22 aufweist. Beim Einschieben des Abdichtkörpers 21 in die Nut 11 wird das Staubfilter 8 fest eingeklemmt und ein dichter Abschluß erzielt.

Fig. 6 zeigt eine mögliche Verteilung der Belüftungsdurchlässe an einer Wand 4 des Kollektorgehäuses 1. Ersichtlich ist die Fläche des Staubfilters 8 ein vielfaches größer als der Querschnitt der drei Belüftungsdurchlässe 6, die gleichmäßig über die Breite der Stirnwand des Kollektorgehäuses verteilt sind.

Fig. 7 veranschaulicht eine weitere Ausführungsform des Sonnenkollektors. Hierbei ist in den Boden 22 des Kollektorgehäuses 1 eine im Querschnitt rechteckige Vertiefung 23 ausgeformt, die sich in der wärmeisolierenden Schicht 2 über die gesamte Breite des Kollektorgehäuses 4 erstreckt. Zwischen den beiden zueinander parallel verlaufenden Seitenwänden 24, 24a der Vertiefung 23 ist im Abstand zum Grund 26 der Vertiefung 23 das Staubfilter 8 in zwei Nuten 27, 27a gehaltert. Die Anordnung entspricht im wesentlichen der Ausgestaltung gemäß Fig. 5.

Vom Grund 26 der Vertiefung in den freien Innenraum 3 des Kollektorgehäuses erstreckt sich der Belüftungsdurchlaß 6.

In Fig. 8 ist eine andere Ausgestaltung des Kollektorgehäuses von unten veranschaulicht. Hierbei ist anstelle der länglichen, rechteckigen Gestalt des Staubfilters 8 bzw. der Vertiefung 23, wie sie in Fig. 7 veranschaulicht ist, ein kreisrundes Staubfilter 8 in den Boden 22 des Kollektorgehäuses 1 eingelassen. In der Mitte des Staubfilters 8 verläuft der Belüftungsdurchlaß 6 durch die wärmeisolierende Schicht 2 hindurch in den freien Innenraum 3 des Kollektorgehäuses 1. Auch bei dieser Ausgestaltung ist das Staubfilter 8 in einer Vertiefung so angeordnet, daß zwischen dem Grund der Vertiefung und dem Staubfilter 8 ein freier Zwischenraum verbleibt.

Zur Vereinfachung der Montage bzw. durch Verbesserung der Stabilität des Staubfilters 8 hat dieses einen Rahmen 28, der randseitig umläuft. Mit Hilfe dieses steifen Rahmens 28 kann das Staubfilter 8 auch ohne einen entsprechenden Ansatz in die Vertiefung eingeschoben werden. An dem Rahmen angebrachte Abstandshalter stellen die Einhaltung des Abstandes des Staubfilters 8 von dem Grund der Vertiefung sicher, so daß auch bei einer derartigen Ausgestaltung zwischen dem Belüftungsdurchlaß 6 und dem Staubfilter 8 ein entsprechender freier Zwischenraum verbleibt.

## Patentansprüche

1. Sonnenkollektor mit einem Kollektorgehäuse (1),
- das wenigstens einen das Innere des Kollektorgehäuses (1) mit der Umgebung verbindenden Belüftungsdurchlaß (6) aufweist, wobei wenigstens ein Staubfilter (8) vorgesehen ist,
- das so mit dem Kollektorgehäuse (1) verbunden ist, daß in das Kollektorgehäuse (1) eintretende Luft das Staubfilter (8) passiert,
dadurch gekennzeichnet, daß
- das Staubfilter (8) im Abstand von dem Belüftungsdurchlaß (6) unter Bildung eines Freiraumes angeordnet ist, in dem sich durch das Staubfilter (8) hindurchgetretene Luft aus Umgebung verteilen und in den Belüftungsdurchlaß (6) gelangen kann, und
- das Staubfilter (8) einen größeren Luftdurchlaßquerschnitt als der Belüftungsdurchlaß (6) aufweist.

2. Sonnenkollektor nach Anspruch 1 dadurch gekennzeichnet, daß mehrere Belüftungsdurchlässe (6) an dem Kollektorgehäuse vorgesehen sind.

3. Sonnenkollektor nach einem oder mehreren der vorhergehenden Ansprüche, dadurch gekennzeichnet, daß das Staubfilter (8) an der Außenseite des Kollektorgehäuses (1) angeordnet ist.

4. Sonnenkollektor nach einem der Ansprüche 1 oder 2, dadurch gekennzeichnet, daß das Staubfilter (8) an der Innenseite des Kollektorgehäuses angeordnet ist.

5. Sonnenkollektor nach einem oder mehreren der vorhergehenden Ansprüche 2-4, dadurch gekennzeichnet, daß die Abmessungen des Staubfilters (8) so sind, daß das Staubfilter (8) den Abstand von wenigstens zwei Belüftungsdurchlässen (6) überbrückt.

6. Sonnenkollektor nach einem oder mehreren der vorhergehenden Ansprüche 1, 2 order 4, 5, dadurch gekennzeichnet, daß im Innern des Kollektorgehäuses (1) eine wärmeisolierende Schicht (2) angeordnet ist, und daß das Staubfilter (8) zwischen der Innenseite des Kollektorgehäuses (1) und der wärmeisolierenden Schicht (2) angeordnet ist.

7. Sonnenkollektor nach einem oder mehreren der vorhergehenden Ansprüche, dadurch gekennzeichnet, daß an dem Kollektorgehäuse (1) ein Ansatz (7) zur Aufnahme des Staubfilters (8) vorgesehen ist.

8. Sonnenkollektor nach Anspruch 6, dadurch gekennzeichnet, daß an der wärmeisolierenden Schicht (2) ein Ansatz (7) zur Aufnahme des Staubfilters (8) vorgesehen ist.

9. Sonnenkollektor nach einem der beiden vorhergehenden Ansprüche, dadurch gekennzeichnet, daß der Ansatz (7) zwei im Abstand von dem Kollektorgehäuse (1) und/oder der wärmeisolierenden Schicht (2) gehalterte, einander gegenüberstehende Nuten (11) aufweist, zwischen die das Staubfilter (8) zu seiner Halterung einbringbar ist.

10. Sonnenkollektor nach einem der Ansprüche 7 oder 8, dadurch gekennzeichnet, daß der Ansatz (7) durch eine im Abstand von dem Kollektorgehäuse (1) und/oder der wärmeisolierenden Schicht (2) gehalterte, umlaufende Ringnut oder zwei schienenartige parallele Nuten gebildet ist, in die das Staubfilter (8) einbringbar ist.

11. Sonnenkollektor nach einem der beiden vorhergehenden Ansprüche, dadurch gekennzeichnet, daß der Abstand der jeweiligen Flanken (18, 18a) der Nuten (11) ausreicht, um das Staubfilter (8) und wenigstens einen Abdichtkörper (21) in die Nuten (11) einzubringen.

12. Sonnenkollektor nach dem vorhergehenden Anspruch, dadurch gekennzeichnet, daß wenigstens eine der jeweiligen Flanken (18, 18a) und der daran anliegende Abdichtkörper (21) einander entsprechende Hinterschneidungen (19, 21) aufweisen.

13. Sonnenkollektor nach einem oder mehreren der vorhergehenden Ansprüche, dadurch gekennzeichnet, daß das Staubfilter (8) einen Rahmen (28) aufweist.

## Claims

1. Solar collector comprising a collector casing (1)
• having at least one aerating opening (6) which connects the interior of said collector casing (1) with the surroundings, and having at least one dust filter (8),
• said dust filter being connected with said collector casing (1) such that incoming air passes said dust filter (8),
characterized in that
• said dust filter (8) is arranged at a distance from said aerating opening (6) by forming a clearance in which air from the surroundings which has passed said dust filter (8) may distribute and reach the aerating opening (6), and
• that said dust filter (8) has a larger air permeability section than said aerating opening (6).

2. Solar collector according to claim 1, characterized in that the collector casing is provided with several aerating openings (6).

3. Solar collector according to one or several of the preceding claims, characterized in that the dust filter (8) is arranged at the outside of said collector casing (1).

4. Solar collector according to any of claims 1 or 2, characterized in that said dust filter (8) is arranged at the inside of said collector casing (1).

5. Solar collector according to one or several of the preceding claims 2-4, characterized in that said dust filter (8) is dimensioned such that the dust filter (8) bridges the distance between at least two aerating openings (6).

6. Solar collector according to one or several of the preceding claims 1, 2 or 4, 5, characterized in that the interior of said collector casing (1) is provided with a heat insulating layer (2), and in that said dust filter (8) is arranged between the inside of said collector casing (1) and said heat insulating layer (2).

7. Solar collector according to one or several of the preceding claims, characterized in that said collector casing (1) comprises a shoulder (7) for receiving said dust filter(8).

8. Solar collector according to claim 6, characterized in that said heat insulating layer (2) comprises a shoulder (7) for receiving said dust filter (8).

9. Solar collector according to any of the two preceding claims, characterized in that said shoulder (7) comprises two grooves (11) opposing each other and held at a distance from said collector casing (1) and/or said heat insulating layer (2) for inserting said dust filter (8) therebetween.

10. Solar collector according to any of claims 7 or 8, characterized in that said shoulder (7) is formed by an annular circumferential groove or two rail-type parallel grooves held at a distance from said collector casing (1) and/or said heat insulating layer (2) for inserting said dust filter (8).

11. Solar collector according to any of the two preceding claims, characterized in that the distance of the respective flanks (18, 18a) of said grooves (11) will suffice to receive said dust filter (8) and at least one sealing body (21).

12. Solar collector according to the preceding claim, characterized in that at least one of said flanks (18, 18a) and its adjacent sealing body (21) comprise undercuts (19, 21) corresponding to each other.

13. Solar collector according to one or several of the preceding claims, characterized in that said dust filter (8) comprises a frame (28).

## Revendications

1. Collecteur solaire comprenant un boîtier de collecteur (1),
- qui présente au moins un passage de ventilation (6) qui relie l'intérieur du boîtier de collecteur (1) avec l'environnement, au moins un filtre à poussières (8) étant prévu,
- qui est relié au boîtier de collecteur (1) de telle façon que l'air pénétrant dans le boîtier de collecteur (1) passe par le filtre à poussières (8),
caractérisé en ce que
- le filtre à poussières (8) est disposé espacé du passage de ventilation (6) en formant un espace libre dans lequel l'air provenant de l'environnement qui a pénétré en traversant le filtre à poussières (8) peut se répartir et parvenir dans le passage de ventilation (6), et
- le filtre à poussières (8) présente une section de passage d'air plus grande que celle du passage de ventilation (6).

2. Collecteur solaire selon la revendication 1 caractérisé en ce que plusieurs passages de ventilation (6) sont prévus sur le boîtier de collecteur.

3. Collecteur solaire selon l'une ou plusieurs des revendications précédentes caractérisé en ce que le filtre à poussières (8) est disposé du côté extérieur du boîtier de collecteur (1).

4. Collecteur solaire selon l'une des revendications 1 ou 2 caractérisé en ce que le filtre à poussières (8) est disposé du côté intérieur du boîtier de collecteur.

5. Collecteur solaire selon l'une ou plusieurs des revendications 2-4 caractérisé en ce que le filtre à poussières (8) a des dimensions qui lui permettent de s'étendre sur l'écartement entre au moins deux passages de ventilation (6).

6. Collecteur solaire selon l'une ou plusieurs des revendications 1, 2 ou 4, 5 caractérisé en ce qu'une couche d'isolation thermique (2) est disposée à l'intérieur du boîtier de collecteur (1) et en ce que le filtre à poussières (8) est disposé entre la face intérieure du boîtier de collecteur (1) et la couche d'isolation thermique (2).

7. Collecteur solaire selon l'une ou plusieurs des revendications précédentes caractérisé en ce qu'une pièce (7) destinée à la réception du filtre à poussières (8) est prévue sur le boîtier de collecteur (1).

8. Collecteur solaire selon la revendication 6 caractérisé en ce qu'une pièce (7) destinée à la réception du filtre à poussières (8) est prévue sur la couche d'isolation thermique (2).

9. Collecteur solaire selon l'une des deux revendications précédentes caractérisé en ce que la pièce (7) présente deux rainures se faisant face (11) maintenues espacées du boîtier de collecteur (1) et/ou de la couche d'isolation thermique (2), entre lesquelles le filtre à poussières (8) peut être introduit pour sa fixation.

10. Collecteur solaire selon l'une des revendications 7 ou 8 caractérisé en ce que la pièce (7) est formée d'une rainure annulaire périphérique maintenue espacée du boîtier de collecteur (1) et/ou de la couche d'isolation thermique (2) ou de deux rainures parallèles en forme de rails dans lesquelles le filtre à poussières peut être introduit.

11. Collecteur solaire selon l'une des deux revendications précédentes caractérisé en ce que l'espacement entre les flancs (18, 18a) respectifs des rainures (11) est suffisant pour introduire le filtre à poussières (8) et au moins un élément d'étanchéité (21) dans les rainures (11).

12. Collecteur solaire selon la revendication précédente caractérisé en ce qu'au moins un des flancs respectifs (18, 18a) et l'élément d'étanchéité (21) qui s'y applique présentent des contre-dépouilles (19, 21) correspondantes.

13. Collecteur solaire selon l'une ou plusieurs des revendications précédentes caractérisé en ce que le filtre à poussières (8) présente un cadre (28).
